## Europäisches Patentamt

## European Patent Office

## Office européen des brevets

(19)

(11) Veröffentlichungsnummer: **0 015 394**
**B1**

(12) **EUROPÄISCHE PATENTSCHRIFT**

(45) Veröffentlichungstag der Patentschrift:
04.08.82

(51) Int. Cl.³: **A 01 K 1/04**

(21) Anmeldenummer: **80100589.3**

(22) Anmeldetag: **05.02.80**

(54) **Aufstallung für Rinder.**

(30) Priorität: **21.02.79 DE 2906744**

(43) Veröffentlichungstag der Anmeldung:
**17.09.80 Patentblatt 80/19**

(45) Bekanntmachung des Hinweises auf die Patenterteilung:
**04.08.82 Patentblatt 82/31**

(84) Benannte Vertragsstaaten:
**AT CH FR IT NL**

(56) Entgegenhaltungen:
**DE-U-1 993 267**
**DE-U-7 428 280**
**DE-U-7 832 485**
**US-A-2 578 093**
**US-A-3 166 045**

(73) Patentinhaber: **Hacker, Josef, Schulstrasse 7,
D-8254 Mittbach (DE)**

(72) Erfinder: **Hacker, Josef, Schulstrasse 7, D-8254 Mittbach
(DE)**

(74) Vertreter: **Wächtershäuser, Günter, Dr.,
Gewürzmühlstrasse 5, D-8000 München 22 (DE)**

BUNDESDRUCKEREI BERLIN

## Aufstellung für Rinder

Die Erfindung bezieht sich auf eine Aufstallung für Rinder nach dem Oberbegriff des Patentanspruchs 1.

Derartige Aufstallungen sind aus dem DE-U-7 428 280 und der US-A-3 166 045 bekannt.

Da sich eine im abgelegten Zustand befindliche Kuh beim Aufstehen nach vorne schiebt, und zwar im Zuge einer nach vorne ausschwingenden Pendelbewegung, muß der untere Rand der Schulterstützgitter der bekannten Aufstallungen verhältnismäßig hoch über der Standfläche des Standplatzes angeordnet sein, um eine Behinderung des aufstehenden Tieres durch das Schulterstützgitter zu vermeiden. Hierdurch besteht jedoch die Gefahr, daß das Tier sich unter dem Schulterstützgitter hindurch in Richtung auf die Futterstelle vorschieben und unter Umständen auf diese Weise aus der Aufstallung entweichen kann. Diese Gefahr ist bei einem verhältnismäßig kleinen Tier besonders groß.

Bei den bekannten Aufstallungen sind somit die beiden Forderungen, daß einerseits beim Abliegen, im Ruhezustand sowie beim Aufstehen ein Tier einen möglichst großen Freiraum zur Verfügung hat und daß andererseits zuverlässig verhindert ist, daß das Tier nach vorne aus dem Viehstand entweichen kann, nicht in zufriedenstellender Weise zu erfüllen.

Der Erfindung liegt daher die Aufgabe zugrunde, eine Aufstallung für Rinder der eingangs näher genannten Art zu schaffen, die in gleichem Maße für große und kleine Tiere einen genügend großen Freiraum für das Tier beim Abliegen im Ruhezustand und beim Aufstehen bietet, ohne daß das Tier beim Abmisten die Liegefläche verschmutzen kann, und zugleich zuverlässig verhindert, daß das Tier nach vorne aus der Aufstallung entweichen kann.

Zur Lösung dieser Aufgabe sieht die Erfindung vor, daß jeder Gitterschenkel in einem sich über einen wesentlichen Teil seiner Längsausdehnung erstreckenden unteren Abschnitt gegenüber dem oberen Abschnitt stumpfwinkelig nach vorne unten zur Futterstelle hin geneigt angeordnet ist. Der stumpfe Winkel liegt vorzugsweise im Bereich von 120 bis 150 Grad.

Hierdurch wird mit nur sehr geringem technischem Aufwand verwirklicht, daß selbst bei sehr niedriger Anordnung des Schulterstützgitters die Tiere beim Aufstehen praktisch nicht durch die unteren Gitterteile am Vorwärtsschieben gehindert werden, während dennoch das aufrecht stehende Tier weit genug nach hinten zurückgedrängt wird, um sicherzustellen, daß beim Misten die Liegefläche nicht beschmutzt wird. Der gemäß der Erfindung nach vorne unten geneigt angeordnete untere Abschnitt des Gitterschenkels sorgt nämlich dafür, daß die für ein abgelegtes Tier maßgebliche Höhenbegrenzung so weit nach vorne geschoben ist, daß zwar dadurch ein Hindurchkriechen unter dem Schulterstützgitter verhindert wird, jedoch beim Aufstehen keine nennenswerte Behinderung entsteht, weil nämlich derjenige Raum, der zu dem oben diskutierten Vorwärtsschub zur Verfügung stehen muß, durch den unteren Abschnitt des Gitterschenkels ausreichend zur Verfügung gestellt wird. Es erweist sich beim Aufstehen weiterhin als vorteilhaft, daß ein Tier bei einem natürlich und locker geführten Aufstehvorgang, wenn der zur Verfügung stehende Raum voll ausgenützt wird, an dem nach unten vorne geneigten, unteren Abschnitt des Gitterschenkels entlang gleiten kann ohne hart anzustoßen. Die Tiere lernen daher rasch, den zur Verfügung stehenden Raum tatsächlich auch voll auszuschöpfen, da sie die Erfahrung gewinnen, daß ein unter Umständen beim Aufstehen vorkommendes Anstoßen an dem Schulterstützgitter gefahrlos und schmerzlos riskiert werden kann.

Ein weiterer Vorteil des erfindungsgemäßen Schulterstützgitters besteht darin, daß auch bei Tieren unterschiedlicher Größe eine Verstellung zum Zwecke einer individuellen Anpassung nicht erforderlich ist, sondern der angestrebte Zweck wegen der speziellen Formgebung des Schulterstützgitters bei fester Einstellung für unterschiedlich große Tiere erreicht wird.

Vorteilhafte Weiterbildungen und bevorzugte Ausführungsformen des Erfindungsgegenstandes ergeben sich aus den Unteransprüchen.

Die Erfindung wird nachfolgend anhand zweier in den Zeichnungen dargestellter Ausführungsbeispiele näher erläutert. Es zeigt

Fig. 1 eine Aufstallung für Rinder mit einem Schulterstützgitter in der Seitenansicht,

Fig. 2 das Schulterstützgitter der Aufstallung nach Figur 1 in einer perspektivischen, vergrößerten Darstellung,

Fig. 3 eine Vorderansicht zweier Aufstallungen der in der Figur 1 dargestellten Art,

Fig. 4 eine Draufsicht auf die in der Figur 3 dargestellten Aufstallungen und

Fig. 5 eine alternative bevorzugte Ausführungsform des Schulterstützgitters in einer perspektivischen Darstellung.

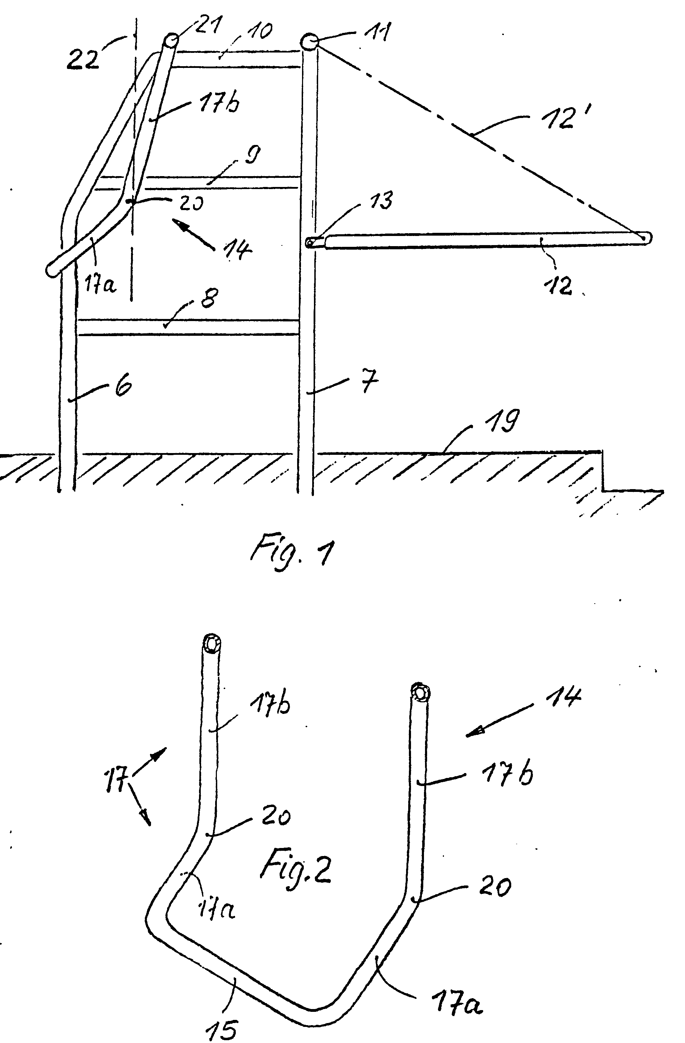

Aufstallungen 1 und 2, die in den Figuren 3 und 4 in einer schematischen Übersichtsdarstellung in einem Aufriß bzw. in einem Grundriß veranschaulicht sind, haben seitliche Standbegrenzungselemente 3, 4 und 5. Aus der Figur 1 ist ersichtlich, daß jedes seitliche Standbegrenzungselement 3, 4 oder 5 ein vorderes Standrohr 6 und ein hinteres Standrohr 7 aufweist. Das vordere Standrohr 6 ist mit dem hinteren Standrohr 7 durch horizontale Streben 8, 9 und 10 verbunden, die auf unterschiedlichen Höhen angeordnet sind.

In Gelenken 13 ist an den hinteren Standrohren 7 jeder Aufstallung 1, 2 ein Rahmen 12 schwenkbar angebracht, der über Ketten 12' an einem Querverbinder 11 gehalten ist. Der Rahmen 12 schließt jeweils ein Tier in seinem Standplatz ein. Wenn ein Tier in die Aufstallung 1 bzw. 2 hineingehen möchte, hebt es den Rahmen 12 an, indem es mit seinem Kopf unter den Rahmen 12 greift und den Rahmen beim Vorwärtsgehen nach oben schwenkt. Sobald das Tier vollständig in die Aufstallung hineingegangen ist, fällt der Rahmen 12 in die in der Figur 1 dargestellte Lage herunter und wird in dieser Stellung durch die Ketten 12' gehalten. Nach dem Anheben des Rahmens 12 kann das Tier rückwärts wieder aus der Aufstallung heraustreten.

Die vordere Begrenzung der Aufstallung 1, 2 erfolgt durch ein Schulterstützgitter 14, wie es insbesondere in der Figur 2 perspektivisch dargestellt ist. Das Schulterstützgitter 14 hat eine U-förmige Gestalt. Der Mittelschenkel 15 des Schulterstützgitters 14 ist mit einer Schelle 16 an dem vorderen Standrohr 6 befestigt. Die Enden der freien Schenkel 17 sind mit Schellen 18 an einem Querrohr 21 befestigt. Das Querrohr 21 ist seinerseits mit dem vorderen Standrohr 6 fest verbunden.

Das Schulterstützgitter 14 weist zwei freie Gitterschenkel 17 auf, die durch den horizontalen Mittelschenkel 15 miteinander verbunden sind. Jeder freie Gitterschenkel 17 ist in einen unteren Abschnitt 17a und einen oberen Abschnitt 17b gegliedert und der untere Abschnitt 17a ist gegenüber dem oberen Abschnitt 17b stumpfwinkelig nach vorne unten geneigt angeordnet. Gemäß der Darstellung in der Figur 2 geht der untere Abschnitt 17a in einem Scheitelpunkt 20 in den oberen Abschnitt 17b über.

Für die Ausbildung und Anordnung des Schulterstützgitters 14 bieten sich in der Praxis folgende Abmessungen als besonders günstig an: Die Höhe des unteren Randes des unteren Abschnittes 17a des freien Gitterschenkels 17 liegt vorzugsweise in einem Bereich von etwa 65 bis 100 cm oberhalb der Standfläche 19 des Standplatzes. Der Scheitelpunkt 20 kann in einem Bereich von 85 bis 120 cm liegen. Obwohl die exakten Abmessungen des Schulterstützgitters 14 von der Rasse und damit von der Größe der Tiere abhängen, kann bei einer Anordnung, bei welcher der untere Rand des unteren Abschnittes 17a auf einer Höhe von 80 cm und der Scheitelpunkt 20 auf einer Höhe von 105 cm oberhalb der Standfläche 19 angeordnet sind, den praktischen Erfordernissen in vollem Umfang entsprochen werden.

Bei einer besonders vorteilhaften Anordnung ist der obere Abschnitt 17b gegenüber der Vertikalen 22 um etwa 10 Grad zum Standplatz hin gekippt, während der untere Abschnitt 17a mit dem oberen Abschnitt 17b einen Winkel von etwa 130 Grad bildet. Bei einem gegenüber der Vertikalen um etwa 10 Grad gekippten oberen Abschnitt 17b beträgt der Winkel vorzugsweise etwa 150 Grad.

Wenn der freie Gitterschenkel 17 sich mit seinem oberen Abschnitt 17b bis zu einer Höhe erstreckt, die im Bereich des oberen Randes des Viehstandes etwa in Kopfhöhe eines aufrecht stehenden Tiers angeordnet ist, ist der Scheitelpunkt 20 vorzugsweise so gelegt, daß der untere Abschnitt 17a sich über etwa ein Drittel des Gitterschenkels 17 und der obere Abschnitt 17b sich über etwa zwei Drittel des Gitterschenkels 17 erstrecken.

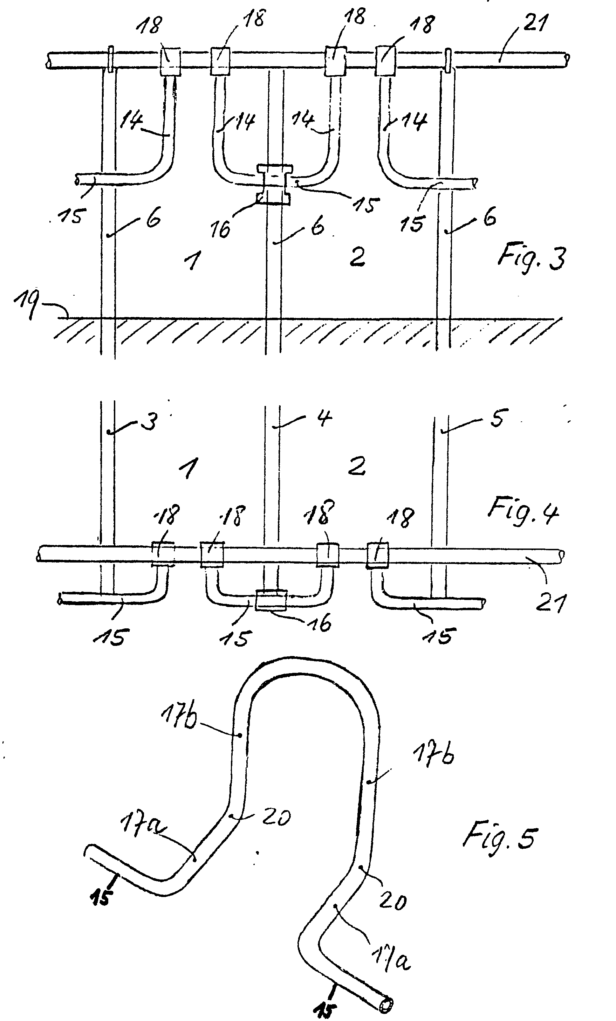

Anstatt der in der Figur 2 dargestellten Ausführungsform eines Schulterstützgitters 14, das eine Querverbindung zwischen den Gitterschenkeln 17 im unteren Bereich vorsieht, kann in einer alternativen Ausführungsform auch ein Schulterstützgitter 14 gemäß der Darstellung in der Figur 5 verwendet werden, bei welchem die Querverbindung im oberen Bereich der Gitterschenkel 17 angebracht ist. Grundsätzlich ist eine Querverbindung zwischen den Gitterschenkeln 17 überhaupt nicht erforderlich. Es hängt von rein konstruktiven Gestaltungsbedingungen und von Festigkeitsüberlegungen ab, ob und in welcher Weise eine zur Befestigung des Schulterstützgitters zweckmäßige Querverbindung oder eine andere zusätzliche Befestigung oder Versteifung vorgesehen werden.

Bei der in der Figur 5 dargestellten Ausführungsform besteht die Möglichkeit, daß das Schulterstützgitter lediglich an den Standsäulen befestigt werden kann, wenn keine durchgehende obere Begrenzung der Viehstände vorhanden ist.

Zur Wirkungsweise der Anordnung in Verbindung mit den Zeichnungen ist darauf hinzuweisen, daß sich das Tier zum Aufstehen aus der Ruhelage zwar weiter nach vorne schiebt, bei dieser Vorwärtsbewegung durch die nach vorne verlagerten unteren Enden der Gitterschenkel 17 jedoch nicht behindert wird. Bei natürlichem Bewegungsablauf hat das aufstehende Tier nach dem anfänglichen Vorwärtsschub, bevor es nennenswert mit seiner Schulter- und Hals-Partie an Höhe gewinnt, sich wieder so weit nach hinten bewegt, daß die im Bereich des Schulterstützgitters 14 befindlichen Körperteile unter dem unteren Abschnitt 17a und allenfalls an diesem Abschnitt 17a entlang bewegt werden. Es kann somit praktisch nicht zu nennenswerten Behinderungen beim Aufstehen kommen, da allenfalls die Schulter-Partie an dem Schenkel 17 in seinem unteren Abschnitt 17a oder im Bereich seines Knickpunktes 20 entlanggleiten kann, was von dem Tier nicht als unangenehm empfunden wird und deshalb nicht gefürchtet und gemieden werden müßte.

## Patentansprüche

1. Aufstallung für Rinder mit einem futterstellenseitig angeordneten Schulterstützgitter (14), welches zwei von oben nach unten verlaufende, in seitlicher Richtung als Schulter-Anlageelement dienende, vorzugsweise aus der Vertikalen leicht nach vorne unten hin gekippte Gitterschenkel (17) aufweist, denen jeweils auf der Höhe ihrer unteren Enden ein sich zur Standplatzaußenseite hin erstreckender, gegen Entweichen eines Tieres nach vorne dienender Steg (15) zugeordnet ist, dadurch gekennzeichnet, daß jeder Gitterschenkel (17) in einem sich über einen wesentlichen Teil seiner Längsausdehnung erstreckenden unteren Abschnitt (17a) gegenüber dem oberen Abschnitt (17b) stumpfwinkelig nach vorne unten zur Futterstelle hin geneigt angeordnet ist.

2. Aufstallung nach Anspruch 1, dadurch gekennzeichnet, daß der nach vorne unten geneigte Abschnitt (17a) in sich gerade ist.

3. Aufstallung nach Anspruch 1 oder 2, dadurch gekennzeichnet, daß der stumpfe Winkel etwa im Bereich von 120 Grad bis 150 Grad liegt.

4. Aufstallung nach Anspruch 3, dadurch gekennzeichnet, daß der stumpfe Winkel bei einem im wesentlichen vertikal angeordneten oberen Abschnitt (17b) des Gitterschenkels (17) bei etwa 130 Grad liegt.

5. Aufstallung nach Anspruch 3, dadurch gekennzeichnet, daß der stumpfe Winkel bei einem gegenüber der Vertikalen (22) um etwa 10 Grad gekippten oberen Abschnitt (17b) bei etwa 150 Grad liegt.

6. Aufstallung nach einem der vorhergehenden Ansprüche, dadurch gekennzeichnet, daß das untere Ende des unteren Abschnittes (17a) in einem Bereich von 65 bis 100 cm über der Standfläche (19) des Standplatzes angeordnet ist.

7. Aufstallung nach Anspruch 6, daudrch gekennzeichnet, daß das untere Ende des unteren Abschnittes (17a) des Gitterschenkels (17) auf einer Höhe von etwa 80 cm über der Standfläche (19) angoerdnet ist.

8. Aufstallung nach einem der vorhergehenden Ansprüche, dadurch gekennzeichnet, daß der Scheitelpunkt (20) des stumpfen Winkels in einem Bereich von 85 bis 120 cm über der Standfläche (19) des Standplatzes angeorndet ist.

9. Aufstallung nach Anspruch 8, dadurch gekennzeichnet, daß der Scheitelpunkt (20) auf einer Höhe von etwa 105 cm über der Standfläche (19) angeordnet ist.

10. Aufstallung nach einem der vorhergehenden Ansprüche, dadurch gekennzeichnet, daß bei einem bei aufrecht stehendem Tier bis in Tierkopfhöhe nach oben reichenden Gitterschenkel (17) dessen unterer Abschnitt (17a) sich etwa über ein Drittel der Längsausdehnung des gesamten Gitterschenkels (17) erstreckt.

## Claims

1. Arrangement for a cattle stable with a shoulder support grid (14) arranged on the side of the feeding place, which comprises two legs (17) which serve as shoulder engaging elements in the lateral direction and which extend from above to below, preferably slightly tilted from the vertical forward and downward, whereby these elements are associated at the level of their lower ends to a transverse member (15) extending towards the outside of the standing place of the animal and preventing the animal from escaping towards the front, characterized in that a lower section (17a) of each leg (17) extending over a substantial part of its longitudinal extension, is inclined with respect to the upper section (17b) at an obtuse angle towards the front and below.

2. Arrangement according to Claim 1, characterized in that the section (17a) inclined towards the front and below is a straight section.

3. Arrangement according to one of Claims 1 or 2, characterized in that the obtuse angle is in the range of from 120° to 150°.

4. Arrangement according to Claim 3, characterized in that the obtuse angle is about 130° in case the upper section (17b) of the leg (17) is arranged substantially vertically.

5. Arrangement according to Claim 3, characterized in that the obtuse angle has a value of about 150° in case the upper section (17b) is inclined against the vertical direction (22) by about 10°.

6. Arrangement according to one of the preceding Claims, characterized in that the lower end of the lower section (17a) is located in a range of from 65 to 100 cm above the standing surface (19).

7. Arrangement according to Claim 6, characterized in that the lower end of the lower section (17a) of the leg (17) is arranged at a level of about 80 cm above the standing surface (19).

8. Arrangement according to one of the preceding Claims, characterized in that the apex (20) of the obtuse angle is located in a range of from 85 to 120 cm above the standing surface (19) of the standing place.

9. Arrangement according to Claim 8, characterized in that the apex (20) is located about 105 cm above the standing surface (19).

10. Arrangement according to one of the preceding Claims, characterized in that the lower section (17a) of the leg (17) extends over about one third of the longitudinal extension of the entire leg (17) in case the leg (17) reaches upward to the level of the head of the standing animal.

## Revendications

1. Agencement d'étable pour bovins comprenant une grille de protection d'épaules (14) montée du côté des stations de fourrage et comportant deux branches latérales (17), de préférence légèrement inclinées vers le bas et vers l'avant sur la verticale, faisant fonction latéralement d'éléments d'appui pour les épaules et présentant chacune au niveau de leur extrémité inférieure, une membrure transversale (15) orientée en direction du côté extérieur de l'emplacement de stationnement de l'animal, et servant à entraver celui-ci du côté avant, caractérisé en ce qu'une grande partie de la longueur de chaque branche (17) de la grille est montée de façon que sa section inférieure (17a) forme avec la section supérieure (17b) un angle obtus en s'inclinant vers l'avant et vers le bas en direction du point de fourrage.

2. Agencement d'étable selon la revendication 1, caractérisé en ce que la section (17a) inclinée vers le bas et vers l'avant est rectiligne.

3. Agencement d'étable selon la revendication 1 ou 2, caractérisé en ce que l'angle obtus est compris entre environ 120 et 150°.

4. Agencement d'étable selon la revendication 3, caractérisé en ce que dans le cas où la section supérieure (17b) de la branche (17) de la grille de protection est pratiquement verticale, l'angle obtus est d'environ 130°.

5. Agencement d'étable selon la revendication 3, caractérisé en ce que dans le cas où la section supérieure (17b) de la grille de protection est inclinée par rapport à la verticale (22) d'environ 10°, l'angle obtus est d'environ 150°.

6. Agencement d'étable selon l'une quelconque des revendications précédentes, caractérisé en ce que l'extrémité inférieure de la section inférieure (17a) est montée à une hauteur d'environ 65 à 100 cm au-dessus de la surface de stationnement (19) de la stalle.

7. Agencement d'étable selon la revendication 6, caractérisé en ce que l'extrémité inférieure de la section inférieure (17a) de la branche (17) de la grille est montée à une hauteur d'environ 80 cm au-dessus de ladite surface de stationnement (19) de l'animal.

8. Agencement d'étable selon l'une quelconque des revendications précédentes, caractérisé en ce que le sommet (20) de l'angle obtus est situé à une hauteur de 85 à 120 cm au-dessus de la surface de stationnement (19) de l'animal.

9. Agencement d'étable selon la revendication 8, caractérisé en ce que le sommet (20) est situé à une hauteur d'environ 105 cm au-dessus de la surface de stationnement (19).

10. Agencement d'étable selon l'une quelconque des revendications précédentes, caractérisé en ce que quand l'animal est debout, la branche (17) de la grille, que s'élève jusqu'au niveau de la tête de l'animal, comporte une section inférieure (17a) s'étendant sur approximativement un tiers de la longueur totale de ladite branche (17).

Fig. 1

Fig.2

Fig. 3

Fig. 4

Fig. 5